(19) Europäisches Patentamt
European Patent Office
Office européen des brevets

(11) EP 1 265 949 B1

# (12) EUROPÄISCHE PATENTSCHRIFT

(45) Veröffentlichungstag und Bekanntmachung des Hinweises auf die Patenterteilung:
**24.03.2010 Patentblatt 2010/12**

(21) Anmeldenummer: **01907426.9**

(22) Anmeldetag: **10.01.2001**

(51) Int Cl.:
***C08J 5/18*** *(2006.01)* ***C08L 67/02*** *(2006.01)*
***B32B 27/18*** *(2006.01)* ***B32B 27/36*** *(2006.01)*
***B29C 51/00*** *(2006.01)* *B29C 55/12* *(2006.01)*

(86) Internationale Anmeldenummer:
**PCT/EP2001/000200**

(87) Internationale Veröffentlichungsnummer:
**WO 2001/053393 (26.07.2001 Gazette 2001/30)**

## (54) TRANSPARENTE, BIAXIAL ORIENTIERTE, UV-STABILISIERTE, THERMOFORMBARE FOLIE AUS KRISTALLISIERBAREN THERMOPLASTEN, VERFAHREN ZU IHRER HERSTELLUNG UND IHRE VERWENDUNG

TRANSPARENT, BIAXIALLY ORIENTED, UV-STABILIZED, THERMOFORMABLE FILM MADE OF CRYSTALLIZABLE THERMOPLASTICS, METHOD FOR THE PRODUCTION THEREOF AND ITS USE

FILM THERMOFORMABLE, ÉTIRÉ BIAXIALEMENT, TRANSPARENT, STABLE AUX UV, EN MATIERE THERMOPLASTIQUE CRISTALLISABLE, SON PROCEDE DE FABRICATION ET SON UTILISATION

(84) Benannte Vertragsstaaten:
**DE FR GB IT LU TR**

(30) Priorität: **20.01.2000 DE 10002172**

(43) Veröffentlichungstag der Anmeldung:
**18.12.2002 Patentblatt 2002/51**

(73) Patentinhaber: **Mitsubishi Polyester Film GmbH**
**65203 Wiesbaden (DE)**

(72) Erfinder:
- **MURSCHALL, Ursula**
  **55283 Nierstein (DE)**
- **KERN, Ulrich**
  **55218 Ingelheim (DE)**
- **STOPP, Andreas**
  **55218 Ingelheim (DE)**
- **CRASS, Günther**
  **65232 Taunusstein (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 0 678 376** **EP-A- 0 882 758**
**EP-A- 1 038 905** **WO-A-98/06575**
**DE-A- 19 630 599** **US-A- 5 631 124**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine, transparente, UV-stabilisierte, thermoformbare Folie aus kristallisierbaren Thermoplasten, deren Dicke bevorzugt im Bereich von 10 bis 500 μm liegt. Die Folie enthält mindestens einen UV-Stabilisator als Lichtschutzmittel und zeichnet sich durch eine gute Verstreckbarkeit, eine gute Thermoformbarkeit und durch sehr gute optische und mechanische Eigenschaften aus. Die Erfindung betrifft ferner ein Verfahren zur Herstellung dieser Folie und ihre Verwendung.

Transparente Folien aus kristallisierbaren Thermoplasten mit einer Dicke zwischen 1 und 500 μm sind hinreichend bekannt.

Diese Folien sind nicht thermoformbar und enthalten keinerlei UV-Stabilisatoren als Lichtschutzmittel, so dass sich weder die Folien noch die daraus hergestellten Artikel bzw. Formkörper für Außenanwendungen eignen. Bei Außenanwendungen zeigen diese Folien und Formkörper bereits nach kurzer Zeit eine Vergilbung und eine Verschlechterung der mechanischen Eigenschaften infolge eines photooxidativen Abbaus durch Sonnenlicht.

In der EP-A-0 620 245 sind Folien beschrieben, die hinsichtlich ihrer thermischen Stabilität verbessert sind. Diese Folien enthalten Antioxidationsmittel, welche geeignet sind, in der Folie gebildete Radikale abzufangen und gebildetes Peroxid abzubauen. Ein Vorschlag, wie die UV-Stabilität solcher Folien zu verbessern sei, ist dieser Schrift jedoch nicht zu entnehmen. Der Schrift ist auch nicht zu entnehmen, ob sich diese Folien für Thermoformprozesse eignen,

In der EP-A 0 882 758 werden biaxial orientierte Polyesterfolien für die Metall-Laminierung beschrieben, die durch Anpassung des Diethytenglykol-Gehaltes für den Blechtiefziehprozess besonders geeignet sind.

Die DE-A 196 30 599 beschreibt amorphe Polyethylenterephthalat-Platten mit Dicken von 0,8 bis 20 mm, die in ihrer Oxidations- und Hydrolysestabilität durch den Zusatz von Antioxidantien verbessert sind.

Aufgabe der vorliegenden Erfindung ist es daher, eine transparente, thermoformbare Folie mit einer Dicke von bevorzugt 10 bis 500 μm bereitzustellen, die neben einer guten Verstreckbarkeit, guten mechanischen sowie optischen Eigenschaften vor allem eine hohe UV-Stabilität und Thermoformbarkeit aufweist.

Eine hohe UV-Stabilität bedeutet, dass die Folien durch Sonnenlicht oder andere UV-Strahlung nicht oder nur extrem wenig geschädigt werden, so dass sich die Folien oder daraus hergestellte Formkörper für Außenanwendungen und/oder kritische Innenanwendungen eignen. Insbesondere sollen die Folien bei mehrjährigerAußenanwendung nicht vergilben, keine Versprödung oder Rißbildung der Oberfläche zeigen und auch keine Verschlechterung der mechanischen Eigenschaften insgesamt aufweisen. Hohe UV-Stabilität bedeutet demnach, dass die Folie das UV-Licht absorbiert und Licht erst im sichtbaren Bereich durchlässt

Zu den guten optischen Eigenschaften zählen beispielsweise eine hohe Lichttransmission (> 84 %), ein hoher Oberflächenglanz (> 120), eine extrem niedrige Trübung (< 20 %) sowie eine niedrige Gelbzahl (YID < 10).

Zu den guten mechanischen Eigenschaften zählt unter anderem eine hoher E-Modul (EMD > 3200 N/mm$^2$; $E_{TD}$ > 3500 N/mm$^2$) sowie gute Reißfestigkeitswerte (in MD > 100 N/mm$^2$; in TD > 130 N/mm$^2$).

Zu der guten Verstreckbarkeit zählt, dass sich die Folie bei ihrer Herstellung sowohl in Längs- als auch in Querrichtung hervorragend und ohne Abrisse orientieren läßt. Hinreichende Thermoformbarkeit bedeutet z.B., dass sich die Folie auf handelsüblichen Tiefziehmaschinen ohne unwirtschaftliches Vortrocknen zu komplexen und großflächigen Formkörpern tiefziehen bzw, thermoformen lässt.

Darüber hinaus sollte die erfindungsgemäße Folie rezyklierbar sein, insbesondere ohne Verlust der optischen und der mechanischen Eigenschaften damit sie beispielsweise auch für kurzlebige Produkte und im Messebau eingesetzt werden kann.

Gelöst wird die erfindungsgemäße Aufgabe durch eine transparente, biaxial orientierte thermoformbare Folie, die als Hauptbestandteil einen kristallisjerbaren Thermoplasten oder eine Mischung verschiedener kristallisierbarer Thermoplasten und mindestens einen UV-Stabilisator enthält, wobei der kristallisierbare Thermoplast einen Diethylenglykolgehalt von ≥ 1 Gew.-% aufweist

Die transparente Folie enthält als Hauptbestandteil einen kristallisierbaren Thermoplasten. Erfindungsgemäß versteht man unter kristallisierbaren Thermoplasten kristallisierbare Homopolymere, wie z.B. Polyester, Polyolefine, oder Polyamide; kristallisierbare Copolymere, wie z.B. Polyethylenterephthalat/isophthalat, Polyethylenterephthal/naphthalat: kristallisierbare Compounds; kristallisierbares Rezyklat und andere Variationen von kristallisierbaren Thermoplasten.

Geeignete kristallisierbare bzw. teilkristalline Thermoplaste sind bevorzugt Polyester wie beispielsweise Polyethylenterephthalat, Polybutylenterephthalat, Polyethylennaphthalat, wobei Polyethylenterephthalat (PET) bevorzugt ist. Es können auch Mischungen von kristallisierbaren Thermoplasten verwendet werden. Bevorzugt weisen die Thermoplasten Kristallinitäten im Bereich von 5 bis 65 % auf.

Die transparente Folie kann sowohl einschichtig als auch mehrschichtig sein. Die transparente Folie kann ebenfalls mit diversen Copolyestern oder Haftvermittlern beschichtet sein.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild

infolge von Farbänderung bzw. Vergilbung ändert, sondern auch die mechanisch-physikalischen Eigenschaften negativ beeinflusst werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in $\alpha$-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Folien ungeeignet, da sie zur Verfärbung oder Farbänderung führen. Für transparente, matte Folien sind nur organische und metallorganische Verbindungen geeignet; die dem zu stabilisierenden Thermoplasten keine oder nur eine extrem geringe Farbe oder Farbänderung verleihen, d. h. die in dem Thermoplasten löslich sind.

Im Sinne der vorliegenden Erfindung geeignete UV-Stabilisatoren als Lichtschutzmittel sind UV-Stabilisatoren, die mindestens 70 %, vorzugsweise 80 %, besonders bevorzugt 90%, des UV-Lichtes im Wellenlängenbereich von 180 nm bis 380 nm, vorzugsweise 280 bis 350 nm absorbieren. Diese sind insbesondere geeignet, wenn sie im Temperaturbereich von 260 bis 300 °C thermisch stabil sind, d. h. sich nicht zersetzen und nicht zur Ausgasung führen. Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

Der oder die UV-Stabilisatoren sind vorzugsweise in der/den Deckschichten enthalten. Bei Bedarf kann auch die Kernschicht mit UV-Stabilisator ausgerüstet sein.

Es war völlig überraschend, dass der Einsatz der oben genannten UV-Stabüisatoren in Folien zu dem gewünschten Ergebnis führte. Der Fachmann hätte vermutlich zunächst versucht, eine gewisse UV-Stabilität über ein Antioxidanz zu erreichen, hätte jedoch bei Bewitterung festgestellt, dass die Folie schnell gelb wird.

Vor dem Hintergrund, dass UV-Stabilisatoren das. UV-Licht absorbieren und somit Schutz bieten, hätte der Fachmann wohl handelsübliche Stabilisatoren eingesetzt. Dabei hätte er festgestellt, dass

- der UV-Stabilisator eine mangelnde thermische Stabilität hat und sich bei Temperaturen zwischen 200 °C und 240 °C zersetzt und ausgast;
- er große Mengen (ca. 10 bis 15 Gew.-%) UV-Stabilisator einarbeiten muß, damit das UV-Licht absorbiert wird und damit die Folie nicht geschädigt wird.

Bei diesen hohen Konzentrationen hätte er festgestellt, dass die Folie schon nach der Herstellung gelb ist, bei Gelbwertunterschieden (YID) um die 25. Des Weiteren hätte erfestgestellt, dass die mechanischen Eigenschaften negativ beeinflusst werden. Beim Verstrecken hätte er ungewöhnliche Probleme bekommen wie

- Abrisse wegen mangelnder Festigkeit, d. h. E-Modul zu niedrig;
- Düsenablagerungen, was zu Profilschwankungen führt;
- Walzenablagerungen vom UV-Stabilisator, was zu Beeinträchtigungen der optischen Eigenschaften (Klebedefekte, inhomogene Oberfläche) führt;
- Ablagerungen in Streck-, Fixierrahmen, die auf die Folie tropfen.

Daher war es mehr als überraschend, dass bereits mit niedrigen Konzentrationen des UV-Stabilisators ein hervorragender UV-Schutz erzielt wurde. Sehr überraschend war, dass sich bei diesem hervorragenden UV-Schutz

- der Gelbwert der Folie im Vergleich zu einer nicht stabilisierten Folie im Rahmen der Meßgenauigkeit nicht ändert;
- sich keine Ausgasungen, keine Düsenablagerungen, keine Rahmenausdampfungen einstellten, wodurch die Folie eine exzellente Optik aufweist und ein ausgezeichnetes Profil und eine ausgezeichnete Planlage hat;
- sich die UV-stabilisierte Folie durch eine hervorragende Streckbarkeit auszeichnet, so dass sie verfahrenssicher

und stabil auf high speed film lines bis zu Geschwindigkeiten von 420 m/min produktionssicher hergestellt werden kann.

Des Weiteren ist sehr überraschend, dass auch das Rezyklat wieder einsetzbar ist, ohne den Gelbwert der Folie negativ zu beeinflussen.

Erfindungswesentlich ist, dass der kristallisierbare Thermoplast ein Diethylenglykolgehalt (DEG-Gehalt) von ≥ 1, 0 Gew.%, vorzugsweise ≥ 1,2 Gew.%, insbesondere ≥1,3 Gew.% und/oder ein Polyethylenglykolgehalt (PEG-Gehalt) von ≥1,0 Gew.%, vorzugsweise ≥ 1,2 Gew.%, insbesondere ≥ 1,3 Gew.% und/oder ein Isophthalsäuregehalt (IPA) von 3 Gew.-% bis 10 Gew.-% aufweist.

In einer ganz besonders bevorzugten Ausführungsform enthält die erfindungsgemäße Folie 0,01 Gew.-% bis 5,0 Gew.-% 2-(4,6-Diphenyl-1,3,5-triazin-2-yl)-5-(hexyl)oxyphenol der Formel

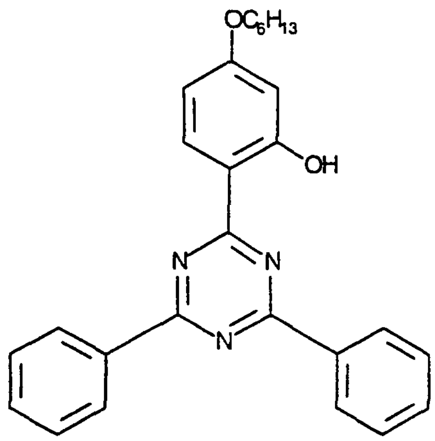

oder 0,01 Gew.-% bis 5,0 Gew.-% 2,2-Methylen-bis(6-(2H-benzotriazol-2-yl)-4-(1,1,2,2-tetramethylpropyl)-phenol der Formel

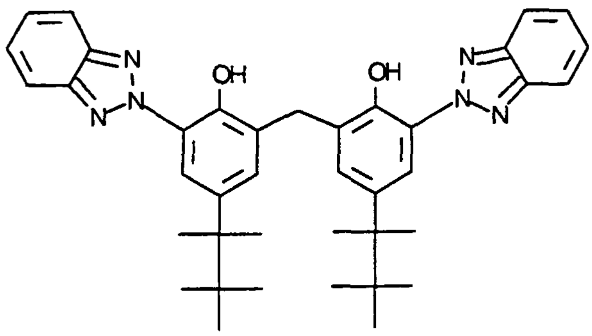

In einer bevorzugten Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise zwischen 0,01 Gew.-% und 5,0 Gew.-%, bezogen auf das Gewicht an kristallisierbarem Polyethylenterephthalat, liegt.

Es war mehr als überraschend, dass sich die Folien durch ein im Vergleich zum Standardthermoplasten höheren Diethylenglykolgehalt und/oder Polyethylenglykolgehalt und/oder IPA-Gehalt wirtschaftlich auf handelsüblichen Tiefziehanlagen thermoformen lassen und eine hervorragende Detailwiedergabe liefern.

Der Oberflächenglanz der erfindungsgemäßen Folien, gemessen nach DIN 67530 (Messwinkel 20°), ist größer als 120, vorzugsweise größer als 140, die Lichttransmission $L^*$, gemessen nach ASTM D 1003, beträgt mehr als 84 %, vorzugsweise mehr als 86 % und die Trübung der Folie, gemessen nach ASTM D 1003, beträgt weniger als 20 %, vorzugsweise weniger als 15 %, welches für die erzielte UV-Stabilität überraschend gut ist.

Die Standardviskosität SV (DCE) des Polyethylenterephthalats, gemessen in Dichloressigsäure nach DIN 53728, liegt bevorzugt zwischen 600 und 1000, vorzugsweise zwischen 700 und 900. Der Kristallitschmelzpunkt, gemessen durch DSC mit einer Aufheizgeschwindigkeit von 10 °C/min, liegt bevorzugt im Bereich von 220-280 °C.

Das Polyethylenterephthalat (PET) zeichnet sich bevorzugt dadurch aus, dass der Diethylenglykolgehalt (DEG-Gehalt) und/oder Polyethylenglykolgehalt (PEG-Gehalt) bei größer 1,3 Gew.-%, insbesondere > 1,5 Gew.-% liegt. In einer besonders bevorzugten Ausführungsform liegt der DEG-Gehalt und/oder PEG-Gehalt zwischen 1,6 Gew.-% und 5 Gew.-%. Erfindungsgemäß liegt der max. DEG und/oder PEG-Gehalt bei ca. 5,0 Gew.-%.

Es ist dabei überraschend, dass sich orientierte PET-Folien durch einen im Vergleich zum Standardpolyester höheren Diethylenglykolgehalt und/oder Polyethylenglykolgehalt thermoformen lassen.

Der Thermoformprozess umfasst in der Regel die Schritte Vortrocknen, Aufheizen, Formen, Abkühlen, Entformen, Tempern. Beim Thermoformprozess wurde festgestellt, dass sich die erfindungsgemäßen Folien, ohne vorheriges Vortrocknen überraschenderweise tiefziehen lassen. Dieser Vorteil im Vergleich zu tiefziehfähigen Polycarbonat- oder Polymethylmethacrylat-Folien, bei denen je nach Dicke Vortrocknungszeiten von 10 - 15 Stunden bei Temperaturen von 100 °C bis 120 °C, erforderlich sind, reduziert drastisch die Kosten des Umformprozesses.

Die erfindungsgemäße Folie, bevorzugt PET-Folie, die mindestens einen UV-Stabilisator enthält, kann sowohl einschichtig als auch mehrschichtig sein.

In der mehrschichtigen Ausführungsform ist die Folie aus mindestens einer Kernschicht und mindestens einer Deckschicht aufgebaut, wobei insbesondere ein dreischichtiger A-B-A oder A-B-C Aufbau bevorzugt ist. Die Schichtdicken der Deckschichten betragen bevorzugt 0,5 - 2 µm.

Für diese Ausführungsform ist es wesentlich, dass der kristallisierbare Thermoplast z.B. das Polyethylenterephthalat der Kernschicht einen ähnlichen DEG-Gehalt und/oder PEG-Gehalt und eine ähnliche Standardviskosität besitzt wie das Polyethylenterephthalat bzw. der Thermoplast der Deckschicht (en), die an die Kernschicht angrenzt (angrenzen).

In einer besonderen Ausführungsform können die Deckschichten auch aus einem Polyethylennaphthalat - Homopolymeren oder aus einem Polyethylentherephtalat-Polyethylennaphthalat Copolymeren oder Compound bestehen.

In dieser Ausführungsform haben die Thermoplaste der Deckschichten ebenfalls ähnliche Standardviskosität wie der Thermoplast z.B. das Polyethylentherephthalat der Kernschicht.

In der mehrschichtigen Ausführungsform ist der UV-Stabilisator vorzugsweise in der bzw. den Deckschichten enthalten. Jedoch kann nach Bedarf auch die Kernschicht mit UV-Stabilisatoren ausgerüstet sein.

Anders als in der einschichtigen Ausführungsform bezieht sich hier die Konzentration des oder der Stabilisatoren auf das Gewicht der Thermoplasten in der mit UV-Stabilisator(en) ausgerüsteten Schicht. Auch hier sind Konzentrationen von 0,01 bis 5,0 Gew.-% bevorzugt.

Ganz überraschend haben Bewitterungsversuche nach der Testspezifikation ISO 4892 mit dem Atlas C165 Weather Ometer gezeigt, dass es im Falle einer dreischichtigen Folie durchaus ausreichend ist, die 0,5 µm bis 2 µm dicken Deckschichten mit UV-Stabilisatoren auszurüsten, um eine verbesserte UV-Stabilität zu erreichen.

Dadurch werden die mit der bekannten Koextrusionstechnologie hergestellten UV-stabilisierten, mehrschichtigen Folien im Vergleich zu den komplett UV-stabilisierten Monofolien wirtschaftlich interessant, da weniger UV-Stabilisator zu einer vergleichbaren UV-Stabilität benötigt werden.

Die Folie kann auch mindestens einseitig mit einer kratzfesten Beschichtung, mit einem Copolyester oder mit einem Haftvermittler versehen sein.

Bewitterungstests haben ergeben, dass die erfindungsgemäß UV-stabilisierten Folien selbst bei Bewitterungstests nach hochgerechnet 5 bis 7 Jahren Außenanwendung im allgemeinen keine Vergilbung, keine Versprödung, keinen Glanzverlust der Oberfläche, keine Rißbildung an der Oberfläche und keine Verschlechterung der mechanischen Eigenschaften aufweisen.

Bei der Herstellung der erfindungsgemäßen Folie wurde ferner festgestellt, dass sich die UV-stabilisierte Folie hervorragend in Längs- und in Querrichtung ohne Abrisse orientieren läßt. Des Weiteren wurden keinerlei Ausgasungen des UV-Stabilisators im Produktionsprozess gefunden, was sehrvorteilhaft ist, da die meisten UV-Stabüisatoren bei Extrusionstemperaturen über 260 °C störende, Ausgasungen zeigen und damit untauglich sind.

Des Weiteren ist die erfindungsgemäße Folie bzw. der Formkörper ohne Umweltbelastung und ohne Verlust der mechanischen Eigenschaften problemlos rezyklierbar, wodurch sie sich beispielsweise für die Verwendung als kurzlebige Werbeschilder oder anderer Werbeartikel eignet.

Darüber hinaus lässt sich die Folie ohne Vortrocknen thermoformen, so dass komplette Formkörper daraus hergestellt werden können.

Für das Thermoformen wurden beispielsweise folgende Verfahrensparameter gefunden.

| **Verfahrensschritt** | **Erfindungsgemäße Folie** |
|---|---|
| Vortrocknen | Nicht erforderlich |
| Temperatur der Form °C | 100 - 160 |

(fortgesetzt)

| Verfahrensschritt | Erfindungsgemäße Folie |
|---|---|
| Aufheizzeit | < 5 sec pro 10 µm Dicke |
| Folientemperatur beim Verformen °C | 160 - 200 |
| Möglicher Verstreckfaktor | 1,5 -2,0 |
| Detailwiedergabe | Gut |
| Schrumpf (Schwindung) % | < 1,5 |

Die Herstellung der erfindungsgemäßen, Folie kann beispielsweise nach einem Extrusionsverfahren in einer Extrusionsstraße erfolgen.

Das Lichtschutzmittel kann bereits beim Thermoplast-Rohstoffhersteller zudosiert werden oder bei der Folienherstellung in den Extruder dosiert werden.

Der DEG-Gehalt und/oder PEG-Gehalt des Polyethylenterephthalats werden zweckmäßigerweise beim Rohstoffhersteller während des Polymerisationsprozesses eingestellt.

Besonders bevorzugt ist die Zugabe des Lichtschutzmittels über die Masterbatch-Technologie. Das Lichtschutzmittel wird in einem festen Trägermaterial dispergiert. Als Trägermaterialien kommen der Thermoplast selbst, wie z. B. das Polyethylenterephthalat, oder auch andere Polymere, die mit dem Thermoplasten ausreichend verträglich sind, in Frage.

Wichtig bei der Masterbatch-Technologie ist, dass die Korngröße und das Schüttgewicht des Masterbatches ähnlich der Korngröße und dem Schüttgewicht des Thermoplasten ist, so dass eine homogene Verteilung und damit eine homogene UV-Stabilisierung erfolgen kann.

Die erfindungsgemäßen Folien können nach bekannten Verfahren z.B. aus einem Polyesterrohstoff mit ggf. weiteren Rohstoffen und dem UV-Stabilisator und/oder weiteren üblichen Additiven in üblicher Menge von 0,1 bis maximal 10 Gew.-% sowohl als Monofolien als auch als mehrschichtige, ggf. koextrudierte Folien mit gleichen oder unterschiedlich ausgebildeten Oberflächen hergestellt werden, wobei eine Oberfläche beispielsweise pigmentiert ist und die andere Oberfläche kein Pigment enthält. Ebenso können eine oder beide Oberflächen der Folie nach bekannten Verfahren mit einer üblichen funktionalen Beschichtung versehen werden.

Bei dem bevorzugten Extrusionsverfahren zur Herstellung einer erfindungsgemäßen Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und in Längsrichtung bzw. in Längs-, in Quer- und nochmals in Längsrichtung und/oder Querrichtung gestreckt. Die Strecktemperaturen liegen im allgemeinen bei $T_g$ + 10 °C bis $T_g$ + 60 °C ($T_g$ = Glastemperatur), das Streckverhältnis der Längsstreckung liegt üblicherweise bei 2 bis 6, insbesondere bei 3 bis 4,5, das der Querstreckung bei 2 bis 5, insbesondere bei 3 bis 4,5, und das der ggf. durchgeführten zweiten Längsstreckung bei 1,1 bis 3. Die erste Längsstreckung kann ggf. gleichzeitig mit einer Querstreckung (Simultanstreckung) durchgeführt werden. Anschließend folgt die Thermofixierung der Folie bei Ofentemperaturen von 200 bis 260 °C, insbesondere bei 220 bis 250 °C. Anschließend wird die Folie abgekühlt und aufgewickelt.

Durch die überraschende Kombination ausgezeichneter Eigenschaften eignen sich die erfindungsgemäße, transparente Folie und daraus hergestellte Formkörper hervorragend für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium.

Aufgrund der guten UV-Stabilität eignet sich die erfindungsgemäße, transparente Folie ebenfalls für Außenanwendungen, wie z.B. für Gewächshäuser, Überdachungen, Außenverkleidungen, Abdeckungen, Anwendungen im Bausektor und Lichtwerbeprofile.

Aufgrund der Thermoformbarkeit eignet sich die erfindungsgemäße Folie zum Thermoformen beliebiger Formkörper für Innen- und Außenanwendungen

Die Erfindung wird im folgenden anhand von Ausführungsbeispielen näher erläutert.

Die Messung der einzelnen Eigenschaften erfolgt dabei gemäß der folgenden Normen bzw. Verfahren.

**Meßmethoden**

DIN = Deutsches Institut für Normung
ISO = International Organization for Standardisation

**DEG-Gehalt/PEG-Gehatt/IPA-Gehalt**

Der DEG-/PEG-/IPA-Gehalt wird gaschromatografisch nach Verseifung in methanolischer KOH und Neutralisation mit wässrigem HCl bestimmt.

**Oberflächenglanz**

Der Oberflächenglanz wird bei einem Messwinkel von 20° nach DIN 67530 gemessen.

**Lichttransmission**

Unter der Lichttransmission ist das Verhältnis des insgesamt durchgelassenen Lichtes zur einfallenden Lichtmenge zu verstehen.
Die Lichttransmission wird mit dem Messgerät "® Hazegard plus" nach ASTM D 1003 gemessen.

**Trübung**

Trübung ist der prozentuale Anteil des durchgelassenen Lichtes, der vom eingestrahlten Lichtbündel im Mittel um mehr als 2,5° abweicht. Die Bildschärfe wird unter einem Winkel kleiner als 2,5° ermittelt.
Die Trübung wird mit dem Messgerät "Hazegard plus" nach ASTM D 1003 gemessen.

**Oberflächendefekte**

Die Oberflächendefekte werden visuell bestimmt.

**Mechanische Eigenschaften**

Der E-Modul, die Reißfestigkeit und die Reißdehnung werden in Längs- und Querrichtung nach ISO 527-1-2 gemessen.

**SV (DCE), IV (DCE)**

Die Standardviskosität SV (DCE) wird angelehnt an DIN 53726 in Dichloressigsäure gemessen.
Die intrinsische Viskosität (IV) berechnet sich wie folgt aus der Standardviskosität (SV)

$$IV\ (DCE) = 6{,}67 \cdot 10^{-4}\ SV\ (DCE) + 0{,}118$$

**Bewitterung (beidseitig), UV-Stabilität**

Die UV-Stabilität wird nach der Testspezifikation ISO 4892 wie folgt geprüft

| | | |
|---|---|---|
| Testgerät | : | Atlas Ci 65 Weather Ometer |
| Testbedingungen | : | ISO 4892, d. h. künstliche Bewitterung |
| Bestrahlungszeit | : | 1000 Stunden (pro Seite) |
| Bestrahlung | : | 0,5 $W/m^2$, 340 nm |
| Temperatur | : | 63 °C |
| Relative Luftfeuchte | : | 50 % |
| Xenonlampe | : | innerer und äußerer Filter aus Borosilikat |
| Bestrahlungszyklen | : | 102 Minuten UV-Licht, dann 18 Minuten UV-Licht mit Wasserbesprühung der Proben dann wieder 102 Minuten UV-Licht usw. |

**Gelbwert**

Der Gelbwert (YID) ist die Abweichung von der Farblosigkeit in Richtung "Gelb" und wird gemäß DIN 6167

gemessen. Gelbwert (YID) von < 5 sind visuell nicht sichtbar.

Bei nachstehenden Beispielen und Vergleichsbeispielen handelt es sich jeweils um transparente Folien unterschiedlicher Dicke, die auf der beschriebenen Extrusionsstraße hergestellt werden.

Alle Folien wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, der Verfärbung, der Oberflächendefekte, der Trübung und des Glanzes geprüft.

## Beispiele

### Beispiel 1

Es wird eine 50 μm dicke, transparente Folie hergestellt, die als Hauptbestandteil Polyethylenterephthalat, 0,3 Gew.-% ®Sylobloc und 1,0 Gew.-% des UV-Stabilisators 2-(4,6-Diphenyl-1,3,5-triazin-2-yl)-5-(hexyl)oxyphenol (®Tinuvin 1577 der Firma Ciba-Geigy) enthält.

Tinuvin 1577 hat einen Schmelzpunkt von 149°C und ist bis ca. 330 °C thermisch stabil.

Zwecks homogener Verteilung werden 0,3 Gew.-% Sylobloc und 1,0 Gew.-% des UV-Stabilisators direkt beim Rohstoffhersteller in das Polyethylenterephthalat eingearbeitet.

Das Polyethylenterephthalat, aus dem die transparente Folie hergestellt wird, hat eine Standardviskosität SV (DCE) von 810, was einer intrinsischen Viskosität IV (DCE) von 0,658 dl/g entspricht und hat einen DEG-Gehalt von 1,6 Gew.-% und einen PEG-Gehalt von 1,7 Gew.-%.

Die 50 μm Monofolie wird nach dem beschriebenen Extrusionsverfahren hergestellt.

Die hergestellte transparente PET-Folie hat folgendes Eigenschaftsprofil:

| | | |
|---|---|---|
| Dicke | : | 50 μm |
| Oberflächenglanz 1. Seite | : | 155 |
| (Messwinkel 20°) 2. Seite | : | 152 |
| Lichttransmission | : | 91 % |
| Trübung | : | 4,0 % |
| Oberflächendefekte pro $m^2$ | : | keine |
| E-Modul längs | : | 3700 $N/mm^2$ |
| E-Modul quer | : | 4900 $N/mm^2$ |
| Reißfestigkeit längs | : | 120 $N/mm^2$ |
| Reißfestigkeit quer | : | 200 $N/mm^2$ |
| Gelbzahl (YID) | : | 3,1 |

Nach je 1000 Stunden Bewitterung pro Seite mit Atlas Ci 65 Weather Ometer zeigt die PET-Folie folgende Eigenschaften:

| | | |
|---|---|---|
| Dicke | : | 50 m |
| Oberflächenglanz 1. Seite | : | 145 |
| (Messwinkel 20°) 2. Seite | : | 141 |
| Lichttransmission | : | 90,1 % |
| Trübung | : | 4,5% |
| Oberflächendefekte (Risse, Versprödungen) | : | keine |
| Gelbzahl (YID) | : | 3,6 |
| E-Modul längs | : | 3650 $N/mm^2$ |
| E-Modul quer | : | 4850 $N/mm^2$ |
| Reißfestigkeit längs | : | 110 $N/mm^2$ |
| Reißfestigkeit quer | : | 200 $N/mm^2$ |

### Beispiel 2

Analog Beispiel 1 wird eine transparente Folie hergestellt, wobei der UV-Stabilisator 2-(4,6-Diphenyl-1,3,5-triazin-2-yl)-5-(hexyl)-oxyphenol (®Tinuvin 1577) in Form eines Masterbatches zudosiert wird. Das Masterbatch setzt sich aus 5 Gew.-% ®Tinuvin 1577 als Wirkstoffkomponente und 95 Gew.-% des Polyethylenterephthalats aus Beispiel 1 zusammen.

Vor der Extrusion werden 90 Gew.-% des Polyethylenterephthalats aus Beispiel 1 mit 10 Gew.-% des Masterbatches 5 Stunden bei 170 °C getrocknet. Die Extrusion und Folienherstellung erfolgt analog zu Beispiel 1.

Die hergestellte transparente PET-Folie hat folgendes Eigenschaftsprofil:

| | | |
|---|---|---|
| Dicke | : | 50 µm |
| Oberflächenglanz 1. Seite | : | 160 |
| (Messwinkel 20°) 2. Seite | : | 157 |
| Lichttransmission | : | 91,3 % |
| Trübung | : | 3,8% |
| Oberflächendefekte | : | keine |
| E-Modul längs | : | 3600 $N/mm^2$ |
| E-Modul quer | : | 4800 $N/mm^2$ |
| Reißfestigkeit längs | : | 110 $N/mm^2$ |
| Reißfestigkeit quer | : | 190 $N/mm^2$ |
| Gelbzahl (YID) | : | 3,4 |

Nach je 1000 Stunden Bewitterung pro Seite mit Atlas Ci 65 Weather Ometer zeigt die PET-Folie folgende Eigenschaften:

| | | |
|---|---|---|
| Dicke | : | 50 µm |
| Oberflächenglanz 1. Seite | : | 148 |
| (Messwinkel 20°) 2. Seite | : | 146 |
| Lichttransmission | : | 89,9 % |
| Trübung | : | 4,1 % |
| Oberflächendefekte | : | keine |
| Gelbzahl (YID) | : | 4,3 |
| E-Modul längs | : | 3500 $N/mm^2$ |
| E-Modul quer | : | 4700 $N/mm^2$ |
| Reißfestigkeit längs | : | 100 $N/mm^2$ |
| Reißfestigkeit quer | : | 170 $N/mm^2$ |

**Beispiel 3**

Analog Beispiel 2 wird eine transparente 350 µm dicke Folie hergestellt. Die hergestellte PET-Folie hat folgendes Eigenschaftsprofil:

| | | |
|---|---|---|
| Dicke | : | 350 µm |
| Oberflächenglanz 1. Seite | : | 149 |
| (Messwinkel 20°) 2. Seite | : | 144 |
| Lichttransmission | : | 84,1 % |
| Trübung | : | 13,1% |
| Oberflächendefekte pro $m^2$ | : | keine |
| Gelbzahl | : | 4,5 |
| E-Modul längs | : | 3100 $N/mm^2$ |
| E-Modul quer | : | 3600 $N/mm^2$ |
| Reißfestigkeit längs | : | 110 $N/mm^2$ |
| Reißfestigkeit quer | : | 190 $N/mm^2$ |

Nach je 1000 Stunden Bewitterung pro Seite mit Atlas Ci 65 Weather Ometer zeigt die PET-Folie folgende Eigenschaften:

| | | |
|---|---|---|
| Dicke | : | 350 μm |
| Oberflächenglanz 1. Seite | : | 136 |
| (Messwinkel 20°) 2. Seite | : | 131 |
| Lichttransmission | : | 84,3 % |
| Trübung | : | 14,0 % |
| Oberflächendefekte (Risse, Versprödung) | : | keine |
| Gelbzahl (YID) | : | 5,4 |
| E-Modul längs | : | 3050 $N/mm^2$ |
| E-Modul quer | : | 3500 $N/mm^2$ |
| Reißfestigkeit längs | : | 100 $N/mm^2$ |
| Reißfestigkeit quer | : | 160 $N/mm^2$ |

**Beispiel 4**

Nach der Koextrusionstechnologie wird eine 50 μm dicke mehrschichtige PET-Folie mit der Schichtreihenfolge A-B-A hergestellt, wobei B die Kernschicht und A die Deckschichten repräsentieren. Die Kernschicht B ist 48 μm dick und die beiden Deckschichten, welche die Kernschicht überziehen, sind jeweils 1 μm dick.

Das für die Kernschicht B eingesetzte Polyethylentherephthalat ist identisch mit dem aus Beispiel 1, enthält aber kein Sylobloc®. Das Polyethylentherephthalat der Deckschichten A ist identisch mit dem Polyethylentherephthalat aus Beispiel 1, d. h. der Deckschichtrohstoff ist mit 0,3Gew.-% Sylobloc ausgerüstet.

Analog Beispiel 2 wird das 5 Gew.-%ige ®Tinuvin 1577 Masterbatch eingesetzt, wobei aber lediglich den 1 μm dicken Deckschichten 20 Gew.-% des Masterbatches über die Masterbatch-Technologie zudosiert werden.

Die hergestellt transparente, mehrschichtige, in den Deckschichten UV-stabilisierte PET-Folie hat folgendes Eigenschaftsprofil:

| | | |
|---|---|---|
| Schichtaufbau | : | A-B-A |
| Gesamtdicke | : | 50 μm |
| Oberflächenglanz 1. Seite | : | 164 |
| (Messwinkel 20°) 2. Seite | : | 159 |
| Lichttransmission | : | 94,2 % |
| Trübung | : | 2,1 % |
| Oberflächendefekte | : | keine |
| E-Modul längs | : | 3750 $N/mm^2$ |
| E-Modul quer | : | 4950 $N/mm^2$ |
| Reißfestigkeit längs | : | 130 $N/mm^2$ |
| Reißfestigkeit quer | : | 210 $N/mm^2$ |
| Gelbzahl (YID) | : | 2,9 |

Nach 1000 Stunden Bewitterung pro Seite mit Atlas CI 65 Weather Ometer zeigt die mehrschichtige Folie folgende Eigenschaften:

| | | |
|---|---|---|
| Schichtaufbau | : | A-B-A |
| Gesamtdicke | : | 50 μm |
| Oberflächenglanz 1. Seite | : | 152 |
| (Messwinkel 20°) 2. Seite | : | 150 |
| Lichttransmission | : | 92,3 % |
| Trübung | : | 3,0 % |
| Oberflächendefekte | : | keine |
| E-Modul längs | : | 3550 $N/mm^2$ |
| E-Modul quer | : | 4800 $N/mm^2$ |
| Reißfestigkeit längs | : | 115 $N/mm^2$ |

(fortgesetzt)

| | | |
|---|---|---|
| Reißfestigkeit quer | : | 185 N/mm$^2$ |
| Gelbzahl (YID) | : | 3,0 |

Die erfindungsgemäßen Beispiele zeigen, dass die optischen und mechanischen Eigenschaften der Folien die gestellten hohen Anforderungen erfüllen, wobei gleichzeitig die UV-Stabilität wesentlich erhöht ist.

Die Folien aus den Beispielen 1 - 4 lassen sich auf handelsüblichen Tiefziehmaschinen z. B. von Fa. Illig ohne Vortrocknung zu Formkörpern thermoformen. Die Detailwiedergabe der Formkörper ist bei einer homogenen Oberfläche hervorragend.

**Vergleichsbeispiel 1**

Analog Beispiel 1 wird eine 50 μm dicke PET-Monofolie hergestellt. Im Gegensatz zu Beispiel 1 enthält die Folie keine UV-Stabilisator. Das eingesetzte PET hat einen üblichen DEG-Gehalt von 0,6 Gew.-% und enthält kein PEG.

Die hergestellte, unstabilisierte, transparente Folie hat folgendes Eigenschaftsprofil:

| | | |
|---|---|---|
| Dicke | : | 50 μm |
| Oberflächenglanz 1. Seite | : | 160 |
| (Messwinkel 20°) 2. Seite | : | 155 |
| Lichttransmission | : | 91,8 % |
| Trübung | : | 3,6 % |
| Oberflächendefekte | : | keine |
| E-Modul längs | : | 4350 N/mm$^2$ |
| E-Modul quer | : | 5800 N/mm$^2$ |
| Reißfestigkeit längs | : | 185 N/mm$^2$ |
| Reißfestigkeit quer | : | 270 N/mm$^2$ |
| Reißdehnung längs | : | 160 % |
| Reißdehnung quer | : | 80 % |
| Gelbzahl (YID) | : | 2,7 |

Die Folie ist unzureichend thermoformbar.

Nach 1000 Stunden Bewitterung pro Seite mit Atlas Cl 65 Weather Ometer weist die Folie an den Oberflächen Risse und Versprödungserscheinungen auf. Ein präzises Eigenschaftsprofil - insbesondere die mechanischen Eigenschaften - kann daher nicht mehr gemessen werden. Außerdem zeigt die Folie eine sichtbare Gelbfärbung.

## Patentansprüche

1. Transparente, biaxial orientierte thermoformbare Folie, enthaltend einen kristallisierbaren Thermoplasten oder eine Mischung verschiedener kristallisierbarer Thermoplasten und mindestens einen UV-Stabilisator, wobei der kristallisierbare Thermoplast einen Diethylenglykolgehalt von ≥ 1 Gew.-% aufweist.

2. Folie gemäß Anspruch 1, **dadurch gekennzeichnet, dass** der Thermoplast eine Kristallinität im Bereich von 5 - 65 % aufweist.

3. Folie gemäß Anspruch 1 oder 2, **dadurch gekennzeichnet, dass** als Thermoplast ein Polyester verwendet wird.

4. Folie gemäß einem oder mehreren der Ansprüche 1 bis 3, **dadurch gekennzeichnet, dass** als Thermoplast Polyethylenterephthalat, Polybutylenterephthalat oder Polyethylennaphthalat verwendet wird.

5. Folie gemäß einem oder mehreren der Ansprüche 1 bis 4, **dadurch gekennzeichnet, dass** als Thermoplast Polyethylenterephthalat verwendet wird.

6. Folie gemäß einem der Ansprüche 4 oder 5, **dadurch gekennzeichnet, dass** das Polyethylenterephthalat einen Diethylenglykolgehalt und /oder einen Polyethylenglykolgehalt von größer 1,3 Gew.-%, bevorzugt von 1,6 - 5 Gew.-

%, aufweist.

7. Folie gemäß einem oder mehreren der Ansprüche 4 bis 6, **dadurch gekennzeichnet, dass** das Polyethylenterephthalat eine Standardviskosität SV (DCE) von 600 -1000 aufweist.

8. Folie gemäß einem oder mehreren der Ansprüche 1 bis 7, **dadurch gekennzeichnet, dass** als UV-Stabilisatoren 2-Hydroxybenzotriazole oder Triazine oder Mischungen dieser UV-Stabilisatoren verwendet werden.

9. Folie gemäß einem oder mehreren der Ansprüche 1 bis 8, **dadurch gekennzeichnet, dass** als UV-Stabilisator 2-(4,6-Diphenyl-1,3,5-triazin-2-yl)-5-(hexyl)oxy-phenol oder 2,2'-Methylen,bis-6-(2H-benzotriazol-2-yl)-4-(1,1,2,2-tetramethylpropyl)-phenol oder Mischungen dieser UV-Stabilisatoren oder Mischungen dieser UV-Stabilisatoren mit anderen verwendet werden.

10. Folie gemäß einem oder mehreren der Ansprüche 1 bis 9, **dadurch gekennzeichnet, dass** die Konzentration des UV-Stabilisators oder der UV-Stabilisatoren 0,01 - 5 Gew,-%, bezogen auf das Gewicht der Schicht des kristallisierbaren Thermoplasten oder der kristallisierbaren Thermoplasten, beträgt.

11. Folie gemäß einem oder mehreren der Ansprüche 1 bis 10, **dadurch gekennzeichnet, dass** es sich um eine mehrschichtige Folie handelt.

12. Folie gemäß Anspruch 11, **dadurch gekennzeichet, dass** der UV-Stabilisator in der Deckschicht oder den Deckschichten enthalten ist.

13. Folie gemäß einem oder mehreren der Ansprüche 1 bis 12, **dadurch gekennzeichnet, dass** sie eine Dicke von 1 - 500 μm aufweist.

14. Folie gemäß einem der Ansprüche 10 oder 11, **dadurch gekennzeichnet, dass** das Polyethylenterephthalat einen Kristallitschmelzpunkt, gemessen durch DSC mit einer Aufheizgeschwindigkeit von 10 °C/min., im Bereich von 220 bis 280 °C aufweist

15. Folie gemäß einem der Ansprüche 10 oder 11, **dadurch gekennzeichnet, dass** das Polyethylenterephthalat eine Kristaitisationstemperatur, gemessen durch DSC mit einer Aufheizgeschwindigkeit von 10 °C/min., im Bereich von 75 bis 280 °C aufweist.

16. Folie gemäß einem der Ansprüche 10 oder 11, **dadurch gekennzeichnet, dass** das eingesetzte Polyethylenterephthalat eine Standardviskosität SV (DCE), gemessen in Dichloressigsäure nach DIN 53728, aufweist, die im Bereich von 600 bis 1000 liegt.

17. Folie nach Anspruch 13 oder 14, **dadurch gekennzeichnet, dass** die Deckschichten Polyethylennaphthalat enthalten.

18. Folie nach Anspruch 13 oder 14, **dadurch gekennzeichnet, dass** die Deckschichten Copolymere oder Compounds aus Polyethylenterephthalat und Polyethylennaphthalat enthalten.

19. Verfahren zur Herstellung einer Folie gemäß einem oder mehreren der Ansprüche 1 bis 18, **dadurch gekennzeichnet, dass** man einen kristallisierbaren Thermoplast oder eine Mischung aus kristallisierbaren Thermoplasten in einem Extruder zusammen mit mindestens einem UV-Stabilisator aufschmilzt, extrudiert, biaxial orientiert und fixiert.

20. Verfahren gemäß Anspruch 19 **dadurch gekennzeichnet, dass** der UV-Stabilisator oder die Mischung aus UV-Stabilisatoren mittels der Masterbatch-Technologie zugesetzt wird.

21. Verwendung einer Folie gemäß einem oder mehreren der Ansprüche 1 bis 18 zur Herstellung von Formkörpern.

22. Formkörper hergestellt unter Verwendung einer Folie gemäß einem oder mehreren der Ansprüche 1 bis 18.

## Claims

1. A transparent, biaxially oriented thermoformable film comprising a crystallizable thermoplastic or a mixture of different crystallizable thermoplastics and at least one UV stabilizer, where the diethylene glycol content of the crystallizable thermoplastic is ≥ 1 % by weight.

2. The film as claimed in claim 1, **characterized in that** the thermoplastic has a crystallinity of from 5 to 65 %.

3. The film as claimed in claim 1 or 2, **characterized in that** the thermoplastic used comprises a polyester.

4. The film as claimed in one or more of claims 1 to 3, **characterized in that** the thermoplastic used comprises polyethylene terephthalate, polybutylene terephthalate or polyethylene naphthalate.

5. The film as claimed in one or more of claims 1 to 4, **characterized in that** the thermoplastic used comprises polyethylene terephthalate.

6. The film as claimed in claim 4 or 5, **characterized in that** the polyethylene terephthalate has a diethylene glycol content and/or a polyethylene glycol content of more than 1.3 % by weight, preferably from 1.6 to 5 % by weight.

7. The film as claimed in one or more of claims 4 to 6, **characterized in that** the polyethylene terephthalate has a standard viscosity SV (DCA) of from 600 to 1000.

8. The film as claimed in one or more of claims 1 to 7, **characterized in that** the UV stabilizers used comprise 2-hydroxybenzotriazoles or triazines or mixtures of these UV stabilizers.

9. The film as claimed in one or more of claims 1 to 8, **characterized in that** the UV stabilizer used comprises 2-(4,6-diphenyl-1,3,5-triazin-2-yl)-5-hexyloxyphenol or 2,2'-methylenebis-6-(2H-benzotriazol-2-yl)-4-(1,1,2,2-tetramethylpropyl)phenol or mixtures of these UV stabilizers or mixtures of these UV stabilizers with others.

10. The film as claimed in one or more of claims 1 to 9, **characterized in that** the concentration of the UV stabilizer(s) is from 0.01 to 5 % by weight, based on the weight of the layer of the crystallizable thermoplastic(s).

11. The film as claimed in one or more of claims 1 to 10, **characterized in that** the film has two or more layers.

12. The film as claimed in claim 11, **characterized in that** the UV stabilizer is present in the outer layer(s).

13. The film as claimed in one or more of claims 1 to 12, **characterized in that** the film has a thickness of from 1 to 500 μm.

14. The film as claimed in claim 10 or 11, **characterized in that** the polyethylene terephthalate has a crystallite melting, point, measured by DSC with a heating rate of 10 °C/min, of from 220 to 280°C.

15. The film as claimed in claim 10 or 11, **characterized in that** the polyethylene terephthalate has a crystallization temperature, measured by DSC with a heating rate of 10 °C/min, of from 75 to 280°C.

16. The film as claimed in claim 10 or 11, **characterized in that** the polyethylene terephthalate used has a standard viscosity SV (DCA), measured in dichloroacetic acid to DIN 53728, of from 600 to 1000.

17. The film as claimed in claim 13 or 14, **characterized in that** the outer layers comprise polyethylene naphthalate.

18. The film as claimed in claim 13 or 15, **characterized in that** the outer layers comprise copolymers or compounds made from polyethylene terephthalate and polyethylene naphthalate.

19. A process for producing a film as claimed in one or more of claims 1 to 18, **characterized in that** a crystallizable thermoplastic or a mixture made from crystallizable thermoplastics is melted in an extruder together with at least one UV stabilizer, extruded, biaxially oriented, and set.

20. The process as claimed in claim 19, **characterized in that** the UV stabilizer or the mixture made from UV stabilizers is added by way of masterbatch technology.

21. The use of a film as claimed in one or more of claims 1 to 18 for producing moldings.

22. A molding produced using a film as claimed in one or more of claims 1 to 18.

**Revendications**

1. Film transparent thermoformable orienté biaxialement, contenant un thermoplastique cristallisable ou un mélange de différents thermoplastiques cristallisables et au moins un stabilisateur UV, le thermoplastique cristallisable comportant une teneur en diéthylène glycol ≥ 1% en poids.

2. Film selon la revendication 1, **caractérisé en ce que** le thermoplastique présente une cristallinité de 5 à 65%.

3. Film selon l'une des revendications 1 ou 2, **caractérisé en ce qu'**un polyester est utilisé comme thermoplastique.

4. Film selon l'une ou plusieurs des revendications 1 à 3, **caractérisé en ce que** du polyéthylène téréphtalate, du polybutylène téréphtalate ou du polyéthylène naphtalate est utilisé comme thermoplastique.

5. Film selon l'une ou plusieurs des revendications 1 à 4, **caractérisé en ce que** du polyéthylène téréphtalate est utilisé comme thermoplastique.

6. Film selon l'une ou plusieurs des revendications 1 à 4, **caractérisé en ce que** le polyéthylène téréphtalate comporte une teneur en diéthylène glycol et/ou une teneur en polyéthylène glycol supérieure à 1,3% en poids, de préférence de 1,6 à 5% en poids.

7. Film selon l'une des revendications 4 à 6, **caractérisé en ce que** le polyéhtylène téréphtalate présente une viscosité standard SV (DCE) comprise entre 600 et 1000.

8. Film selon l'une ou plusieurs des revendications 1 à 7, **caractérisé en ce que** les stabilisateurs UV utilisés sont des 2-hydroxybenzotriazoles ou des triazines ou encore des mélanges de ces stabilisateurs UV.

9. Film selon l'une ou plusieurs des revendications 1 à 8, **caractérisé en ce que** les stabilisateurs UV utilisés sont des 2-(4,6-diphényle-1,3,5-triazine-2-yl)-5-(hexyl)oxy-phénols ou des 2,2'-méthylène-à-6-(2H-benzotriazols-2-yl)-4-(1,1,2,2-tétraméthylpropyles)-phénols ou encore des mélanges de ces stabilisateurs UV ou des mélanges de ces stabilisateurs UV avec d'autres.

10. Film selon l'une ou plusieurs des revendications 1 à 9, **caractérisé en ce que** la concentration du stabilisateur UV ou des stabilisateurs UV s'élève de 0,01 à 5% en poids par rapport au poids de la couche de thermoplastique cristallisable ou des thermoplastiques cristallisables.

11. Film selon l'une ou plusieurs des revendications 1 à 10, **caractérisé en ce qu'**il s'agit d'un film multicouches.

12. Film selon la revendication 11, **caractérisé en ce que** le stabilisateur UV est contenu dans la couche supérieure ou dans les couches supérieures.

13. Film selon l'une ou plusieurs des revendications 1 à 12, **caractérisé en ce qu'**il présente une épaisseur de 1 à 500 μm.

14. Film selon l'une des revendications 10 ou 11, **caractérisé en ce que** le polyéthylène téréphtalate présente un point de fusion cristallite compris entre 220 et 280°, mesuré par DSC, avec une vitesse de chauffe de 10°C/min.

15. Film selon l'une des revendications 10 ou 11, **caractérisé en ce que** le polyéthylène téréphtalate présente une température de cristallisation comprise entre 75 et 280°C, mesurée par DSC, avec une vitesse de chauffe de 10°C/min.

16. Film selon l'une des revendications 10 ou 11, **caractérisé en ce que** le polyéthylène téréphtalate utilisé présente une viscosité standard SV (DCE) comprise entre 600 et 1000, mesurée dans de l'acide dichloroacétique selon DIN 53728.

**17.** Film selon l'une des revendications 13 ou 14, **caractérisé en ce que** les couches supérieures contiennent du polyéthylène naphtalate.

**18.** Film selon l'une des revendications 13 ou 14, **caractérisé en ce que** les couches supérieures contiennent des copolymères ou des composants de polyéthylène téréphtalate et de polyéthylène naphtalate.

**19.** Procédé pour la fabrication d'un film selon l'une ou plusieurs des revendications 1 à 18, **caractérisé en ce qu'**un thermoplastique cristallisable ou un mélange de thermoplastiques cristallisables est fusionné, extrudé, orienté biaxialement et fixé, dans une extrudeuse, ensemble avec au moins un stabilisateur UV.

**20.** Procédé selon la revendication 19, **caractérisé en ce que** le stabilisateur UV ou le mélange de stabilisateurs UV est ajouté au moyen de la technologie masterbatch.

**21.** Utilisation d'un film selon l'une ou plusieurs des revendications 1 à 18, pour la fabrication de corps moulés.

**22.** Corps moulé, fabriqué en utilisant un film selon l'une ou plusieurs des revendications 1 à 18.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0620245 A
- EP 0882758 A
- DE 19630599 A


### In der Beschreibung aufgeführte Nicht-Patentliteratur


- **H. Day ; D. M. Wiles.** *J. Appl. Polym. Sci,* 1972, vol. 16, 203